# Europäisches Patentamt
# European Patent Office
# Office européen des brevets

(19)

(11) Veröffentlichungsnummer: **0 291 665**
**B1**

(12) **EUROPÄISCHE PATENTSCHRIFT**

(45) Veröffentlichungstag der Patentschrift: **02.01.91**

(21) Anmeldenummer: **88104814.4**

(22) Anmeldetag: **25.03.88**

(51) Int. Cl.⁵: **C 02 F 11/14**, C 02 F 3/34, C 02 F 1/56

(54) Verfahren zum Verbessern der Entwässerbarkeit von biologischem Klärschlamm.

(30) Priorität: **24.04.87 DE 3713739**

(43) Veröffentlichungstag der Anmeldung:
**23.11.88 Patentblatt 88/47**

(45) Bekanntmachung des Hinweises auf die
Patenterteilung:
**02.01.91 Patentblatt 91/01**

(84) Benannte Vertragsstaaten:
**AT BE CH DE ES FR GB LI LU NL**

(56) Entgegenhaltungen:
**EP-A-0 220 647**
**US-A-3 414 514**
**US-A-4 342 650**

**CHEMICAL ABSTRACTS, Band 90, Nr. 24, 11. Juni 1979, Seite 324, Zusammenfassung Nr. 191993s, Columbus, Ohio, US; C.G. CARLSON: "Improved filtration of biosludges by enzyme treatment",**

(73) Patentinhaber: **Röhm GmbH**
**Kirschenallee Postfach 4242**
**D-6100 Darmstadt 1 (DE)**

(72) Erfinder: **Jungschaffer, Gerald, Dr.**
**Tannenstrasse 23c**
**D-6104 Seeheim-Jugenheim (DE)**
Erfinder: **Reiner, Roland, Dr.**
**Am Oberfeld 19**
**D-6100 Darmstadt (DE)**
Erfinder: **Sprössler, Bruno, Dr.**
**Auf der Schmelz 93**
**D-6101 Rossdorf 1 (DE)**
Erfinder: **Scordialo, Angelo**
**Odenwaldstrasse 2**
**D-6102 Pfungstadt (DE)**

Courier Press, Leamington Spa, England.

EP 0 291 665 B1

# EP 0 291 665 B1

**Beschreibung**

Die Erfindung betrifft die Steigerung der Filtrierbarkeit von biologischem Klärschlamm mit mehr als 0,5 Gew.-% Trockengehalt, insbesondere von Klärschlamm, dessen Feststoffgehalt (Trockensubstanz) zu wenigstens 30 Gew.-% aus organischem Material besteht. Derartige Klärschlämme kommen vor allem aus anaerob betriebenen Faultürmen.

Stand der Technik

Bei einer typischen Arbeitsweise von Abwasserklärwerken läßt man aus dem anfallenden Abwasser zunächst die groben Feststoffe sedimentieren und trennt diese als sog. Primärschlamm ab. Das überstehende Abwasser wird in eine biologische Klärstufe geleitet, wo die gelösten und die noch suspendierten Feststoffe entweder unter Belüftung oder unter Luftabschluß dem Abbau durch Mikroorganismen ausgesetzt werden. Dabei wird die in dem Abwasser enthaltene organische Substanz zum großen Teil in Form von Mikroorganismenmasse gebunden. Diese setzt sich als Klärschlamm mit einem Feststoffgehalt über 0,5 Gew.-% ab. Das gereinigt Abwasser kann in Flüsse abgelassen oder in Rieselfeldern versickern gelassen werden.

Der Klärschlamm muß auf einen deponierfähigen Trockengehalt entwässert werden. In manchen Fällen unterwirft man den unter Luftzutritt erhaltenen Belebtschlamm einer Faulturmbehandlung unter anaeroben Bedingungen und entwässert den Faulschlamm für sich. Bei der Entwässerung auf Siebbandpressen, Dekantern, Kammerfilterpressen oder dergl. stellt sich das Problem, daß der biologische Klärschlamm, vor allem in Form von Faulschlamm, schwer zu entwässern ist. Der Zusatz von Flockungsmitteln zum Faulschlamm beschleunigt die Entwässerung erheblich und ist deshalb allgemein gebräuchlich. Man erhält mit derartigen Entwässerungsmethoden, beispielsweise Schlämme mit 27 bis 30.-% Feststoffgehalt, jedoch wird für die Deponierung ein Feststoffgehalt von etwa 35% oder mehr verlangt. Daher wird der Feststoffgehalt häufig durch Zusatz von Kalk erhöht, was nicht nur wegen des Kalkbedarfs, sondern auch wegen des höheren Transportgewichts und größeren Deponieraumbedarfs nachteilig ist.

Es ist bekannt, die biologische Abwasserklärung durch den Zusatz von Enzymen zu unterstützen. So werden gemäß DE—A 24 24 116 dem Abwasser Enzyme zugesetzt, die aus im Wasser lebenden Mikroorganismen gewonnen worden sind, wobei unterstellt wird, daß sich in dem Abwasser von selbst eine für das Substrat spezifische Mikroorganismenflora ausbildet. Durch die Enzyme sollen die im Abwasser enthaltenen organischen Inhaltsstoffe beschleunigt zersetzt und dadurch dem Abbau durch Mikroorganismen zugänglich gemacht werden.

Dem gleichen Ziel dient der Zusatz von Enzymen, wie Lipasen, Amylasen, Cellulasen oder Proteinasen, zu den Abwässern von Schlachtereien oder anderen Betrieben, in denen Abwässer mit einer spezifischen Belastung durch Fette, Polysaccharide, Proteine und dergl. anfallen, bei dem Verfahren gemäß DE—A 26 33 514. Durch den Abbau der genannten Inhaltsstoffe wird die Filtrierbarkeit und die Sedimentationsneigung dieser Abwässer verbessert.

P. Dobianzki, C. H. Möbius und H. -H. Hofer diskutieren im "Wochenblatt für Papierfabrikation" 1981, S.564, die Möglichkeit, durch den enzymatischen Abbau von Stärke im Kreislaufwasser der Papierfabrikation mittels alpha-Amylase die Schutzkolloidwirkung der Stärke zu verringern und so mit geringeren Flockungsmittelmengen bei der Klärung auszukommen. Man stellte zwar eine verbesserte Klärbarkeit, gleichzeitig aber erhöhte CSB- und BSB-Werte fest, die auf die Abbauprodukte und den Amylasegehalt zurückgeführt wurden.

Bei den vorstehend beschriebenen Verfahren wird mit dem Enzymeinsatz unmittelbar der Abbau der im ursprünglichen Abwasser enthaltenen Inhaltsstoffe bezweckt. Diese Verfahren kommen aus Kostengründen nur für die Behandlung spezieller Abwässer, die auf andere Weise schwer zu klären sind, in Betracht. Sie lösen nicht das Problem, biologische Klärschlämme stärker zu entwässern. Diesem Ziel dienen einige enzymatische Verfahren, auf die nachfolgend eingegangen wird.

Gemäß DE—A 34 41 690 wird biologischer Klärschlamm mit einem Chelatbildner, wie Nitrilotriessigsäure-Salzen, und mit Enzymen behandelt und läßt sich danach auf 40% seines ursprünglichen Volumens vermindern.

C.—G. Carlson beschreibt in "Filtration & Separation", Jan 1979, S.82—86, die Behandlung von aeroben Bioschlämmen mit Enzymen, insbesondere Amylase, Lipase und Proteinase. Dadurch sollen vor allem die extrazellulären Schleime, die die in den Bioschlämmen enthaltenen Mikroorganismen umgeben und die einen Großteil des schwer abtrennbaren Wassers enthalten, zersetzt werden. Man fand eine mehr von der Einwirkungsdauer als von der Enzymkonzentration abhängige Wirkung. Die Filtrierbarkeit wurde deutlich verbessert.

Aufgabe und Lösung

Die mittels der bekannten Verfahren unter Einsatz von hydrolytischen Enzympräparaten erreichbare Entwässerung biologischer Klärschlämme mit Feststoffgehalten von mehr als 0,5 Gew.-% ist unbefreidigend und soll verbessert werden. Dies wird erfindungsgemäß dadurch erreicht, daß man nach der Einwirkung des hydrolytischen Enzympräparats ein synthetisches organisches Flockungsmittel zusetzt.

Die Erfindung geht von dem von Carlson geäußerten Gedanken aus, daß die extrazellulären Schleime

2

EP 0 291 665 B1

der im Klärschlamm enthaltenen Mikroorganismen die Entwässerung behindern. Während Carlson aber allein die wasserhaltende Wirkung der Schleime zu beseitigen suchte, um Schlämme mit höherem Feststoffgehalt zu erreichen, nehmen die Erfinder eine hemmende Wirkung der Schleime auf den mit organischen Flockungsmitteln bewirkten Flockungsvorgang an. Wenn auch die Erfindung nicht auf eine bestimmte Theorie festgelegt werden soll, lassen sich die Befunde so deuten, daß die Flockung nach einem enzymatischen Angriff auf die Schleime deutlich erfolgreicher verläuft. Jedenfalls wird eine bessere Entwässerbarkeit des Sediments erreicht, die weit über die Wirkung hinausgeht, die sich auf die Verminderung der Schleimmenge selbst zurückführen läßt. Diese Wirkung ist nämlich aus Vergleichsversuchen ohne Flockungsmittel mit und ohne Enzymeinsatz ablesbar.

Dies wird nachfolgend an der Behandlung mehrerer Proben des gleichen Faulschlammes mit einem Feststoffgehalt von 2,6 Gew.-% aus dem Faulturm einer kommunalen Kläranlage veranschaulicht. Als Flockungsmittel wurde ein hochmolekulares Mischpolymerisat aus 30% Acrylamid und 70% Methacyloxyäthyl-trimethylammonium-chlorid eingesetzt. Als Enzym wurde ein proteasereiches Präparat mit einem bei pH 6—9 liegenden Wirkungsoptimum verwendet. Es wurde jeweils das Sediment untersucht, das sich innerhalb von 24 Stunden aus dem Schlamm, gegebenenfalls nach Flockungsmittelzusatz, gebildet hatte. Zur Beurteilung der Entwässerbarkeit wurde die standardisierte Saugzeit (CST) nach der im Anhang beschriebenen Methode ermittelt; sie gibt die Zeit an, in der das aus einer Schlammprobe in ein Filterpapier aufgesaugte Wasser eine bestimmte Ausdehnung erreicht hat. Die Entwässerbarkeit ist um so besser, je kürzer diese Zeit ist.

| | |
|---|---|
| Unbehandelter Schlamm | CST = 434 sec |
| Schlamm mit 2,1 g/kg Enzym | CST = 372 sec |
| Schlamm mit 2,1 g/kg Flockungsmittel | CST = 54 sec |
| Schlamm mit 2,1 g/kg Enzym und 2,1 g/kg Flockungsmittel | CST = 30 sec |

Die Wirkung des Enzyms allein vermindert die CST um 14%. Dagegen vermindert sich die CST bei Flockungsmitteleinsatz unter der Wirkung des Enzyms um 44%.

Ausführung der Erfindung

Das Verfahren der Erfindung eignet sich zur Behandlung aller Klärschlämme, deren Trockensubstanz zu einem erheblichen Anteil, manchmal mehr als der Hälfte, aus organischem Material besteht. Typische Trockengehalte solcher Klärschlämme liegen bei 0,5 bis 10, insbesondere 1 bis 6 Gew.-%. Sie fallen bei gängigen Verfahren der Abwasserbehandlung an, vor allem in anaerob betriebenen Faultürmen. Jedoch können auch Belebtschlämme aus aerob betriebenen Anlagen behandelt werden.

Als synthetisches organisches Flockungsmittel wird in der Regel ein organischer Polyelektrolyt eingesetzt. Diese Flockungsmittel sind bei der Abwasserklärung allgemein gebräuchlich. Üblicherweise handelt es sich um Hochpolymere mit Molekulargewichten (Gew.-Mittelwert) von mehr als 500 000, insbesondere von mehr als 1 Million. Bevorzugte organische Polyelektrolyte gehören dem kationischen Typ an, d.h. sie tragen kovalent an das Polymermolekül gebundene kationische Ladungen. Beispiele solcher kationischer organischer Polyelektrolyte sind Polyäthylenimine bzw. deren Salze und Polymerisate und Mischpolymerisate von äthylenisch ungesättigten, radikalisch polymersierbaren Monomeren mit einer sekundären oder tertiären Aminogruppe oder einer sekundären, tertiären oder quartären Ammoniumsalzgruppe. Zu den letzteren zählen besonders die tert. Aminoalkylester und die tert. Aminoalkylamide der Acryl-und Methacrylsäure sowie deren Salze mit organischen oder insbesondere anorganischen · Säuren und Quaternierungsprodukte. Vorzugsweise werden Mischpolymerisate aus Acrylamid und einem quaternierten Aminoalkylester der Acryl- oder Methacrylsäure eingesetzt, wobei der Anteil der letzteren bevorzugt im Bereich von 20 bis 80 Gew.-% liegen kann.

Als hydrolytisches Enzympräparat werden technische Enzyme eingesetzt, die in der Regel aus Kulturen von Mikroorganismen stammen. Sie enthalten meistens ein Spektrum verschiedener Enzymaktivitäten. Für die Zwecke der Erfindung sind Enzympräparate vorteilhaft, die hohe Aktivitäten an Carbohydrasen, Proteasen, Glykoproteinasen und/oder Lipasen enthalten. Unter den Carbohydrasen sind alpha-Amylasen, Cellulasen und beta-Glukanasen die wichtigsten. Man kann such mehrere technische Enzympräparate mischen, um ein Aktivitätsspektrum von gewünschter Breite zu erhalten. Bevorzugt sind Gemische mit Amylasen, Cellulasen und Proteasen als Hauptaktivitäten. Für Schlämme aus kommunalen Abwässern haben sich Enzympräparate mit einr hohen Cellulase- und/oder Hemicellulase-Aktivität besonders bewährt.

Die Dosierung des hydrolytischen Enzympräparats und des synthetischen Flockungsmittels richtet sich nach den Eigenschaften des zu behandelnden Schlammes. Es zeigt sich, daß die Eigenschaften der Klärschlämme, selbst wenn sie aus der gleichen kommunalen Kläranlage stammen, stark schwanken und oft täglich oder mehrmals täglich Änderungen der Behanlungsweise erfordern. Das kann mit Verschiebungen der im Faulturm wachsenden Mikroorganismen-Propulationen und mit dem wechselnden Anfall von Inhaltsstoffen im Abwasser zusammenhängen. Der Enzymbedarf liegt in der Regel im Bereich

3

von 0,001 bis 10 g/kg Schlamm. Die optimale Menge hängt auch vom Entwässerungsverfahren ab. Das Flockungsmittel wird im allgemeinen in einer Dosierung von 0,02 bis 300 g, bevorzugt 25 bis 150 g je 1000 1 Schlamm angewendet. Die Dosierung beider Zusätze wird vorzugsweise so eingestellt, daß die CST gegenüber dem nur mit Flockungsmittel behandelten Schlamm um wenigstens 10% und vorzugsweise um wenigstens 15% vermindert wird. Obwohl in der Regel die Wirksamkeit des Enzyms mit der Menge und der Einwirkungsdauer zunimmt, ist gelegentlich auch der umgekehrte Fall zu beobachten. Nach einer Einwirkungszeit von 2 Stunden ist oft schon ein Effekt des Enzympräparats zu erkennen. Die optimale Wirkungszeit liegt meistens zwischen 4 und 24 Stunden. Die Wirkung des synthetischen Flockungsmittels tritt sehr schnell ein, so daß unmittelbar nach Zusatz des Flockungsmittels dekantiert oder filtriert werden kann.

Wegen der starken Eigenschaftsschwankungen ist es vorteilhaft, den Betrieb einer Kläranlage auf einen schnellen und häufigen Wechsel der Betriebsbedingungen einzurichten. Wesentlich ist dafür eine Prüfmethode, die Probenahmen in kurzen Zeitabständen gestattet; die bereits erwähnt CST-Methode ist dafür hervorragend geeignet. Mann kann z.B. aus einer Rohrleitung, durch die der Schlamm strömt, in festgelegten Zeitabständen automatisch Proben entnehmen und die CST bestimmen. Eine dafür geeignete Vorrichtung ist im deutschen Gebrauchsmuster G 87 01 550 beschrieben. Bei einem Anstieg der CST kann die automatische Dosierung des Enzyms und/oder des Flockungsmittels erhöht werden et vice versa.

Eine noch genauere Anpassung an Eigenschaftsänderungen des Schlammes wird erreicht, wenn ein oder mehrmals täglich eine größere Zahl von Schlammproben entnommen und mit abgestuften Mengen verschiedener Enzympräparate von unterschiedlichen Aktivitätsspektren versetzt und die CST nach unterschiedlichen Einwirkungszeiten, jeweils nach Flockungsmittelzusatz bestimmt wird. Auch diese Prüfung läßt sich automatisieren und zur selbsttätigen Wahl des Zusatzes mit der niedrigsten CST heranziehen.

Die Enzymbehandlung erfolgt zweckmäßig in einem kontinuierlich durchströmten Behälter mit einem Fassungsvermögen, das der ein- bis mehrtägigen Durchsatzmenge entspricht. Obwohl es möglich wäre, den pH-Wert des Schlammes und seine Temperatur dem Wirkungsoptimum des Enzympräparates anzupassen, wird der Schlamm vorzugsweise unverändert der Enzymbehandlung unterworfen. Der pH-Wert liegt in der Regel zwischen 4,5 bis 9 und die Temperatur bei 5 bis 40 Grad C, sie kann in manchen Fällen bis 75 Grad C gehen.

Nach der Enzymeinwirking wird das Flockungsmittel bevorzugt dem strömendem Schlamm kontinuierlich zudosiert, vorzugsweise in Form einer verdünnten wäßrigen Lösung. Die weitere Behandlung in Sedimentionsbecken, Dekantern, Siebbandpressen u. dergl erfolgt in üblicher Weise. Der abgetrennte Schlamm hat einen Feststoffgehalt, der deutlich über dem nur mit Flockungsmitteln erzielbaren Wert liegt und seine Deponierfähigkeit verbessert. In typischen Fällen wird bei optimaler Behandlung ein Feststoffgehalt von mehr als 30, vorzugsweise 35 oder mehr Prozent erreicht. Der Schlamm kann in diesen Fällen unmittelbar auf die Deponie verbracht werden.

Beispiel 1

In einem kommunalen Klärwerk wurde Klärschlamm zwischen dem Faulturm und dem Eindicker entnommen. Der Gehalt an Trockensubstanz (TS) betrug 2,6%; der pH-Wert lag bei 7,6.

Je ein Liter des Schlammes wurde mit 0,21 bzw. 2,1 g/kg Schlamm-TS eines mikrobiell erzeugten, proteasereichen Enzympräparates mit einem pH-Optimum von 6—8 versetzt. Die Protease-Aktivität nach Löhlein-Volhard (vgl. "Das Leder", 1971, 22(6); 121f.) betrug 20.000 LVE/g. Nach Einwirkungszeiten von 4 und 24 Stunden bei Umgebungstemperatur wurde die CST mit und ohne Flockungshilfsmittel ermittelt. Als Flockungshilfsmittel wurde ein gebräuchliches kationisches Acrylamid-Copolymerisat (Rohafloc® KE 790 der Röhm GmbH, Darmstadt) in einer Dosierung von 2,1 g/kg Schlamm-TS eingesetzt. Zum Vergleich wurden nicht enzymatisch behandelte Schlammproben herangezogen.

Wie aus Tabelle 1 hervorgeht, war die Enzymeinwirking nach 4 Stunden noch nicht feststellbar, jedoch wurde nach 24 Stunden mit und ohne Flockungsmittelzusatz eine deutlich verminderte CST festgestellt. Die Bestimmung der CST erfogte nach einer von U. Loll in "Korrespondenz Abwasser", 24. Jg. 1977, S.295—299 beschriebenen Methode. Dabei wird eine Schlammprobe in einen 18 mm weiten Zylinder eingefüllt, der an der Unterseite mit einer saugfähigen Filterkartonplatte verschlossen ist. Diese saugt Wasser aus der Schlammprobe auf. Gemessen wird die Zeit, in der sich die Kreisfläche des aufgesaugten Wassers von 32 mm auf 45 mm Durchmesser ausdehnt.

TABELLE 1

| Einwirkungs- zeit (Stunden) | Enzym- dosierung (g/kg TS) | Flockungshilfs- mitteldosierung (g/kg TS) | CST (sec) |
|---|---|---|---|
| 4 | — | — | 403,0 ± 20,8 |
| 4 | 0,21 | — | 408,8 ± 10,4 |
| 4 | 2,10 | — | 416,6 ± 13,2 |
| 24 | — | — | 434,1 ± 16,7 |
| 24 | 0,21 | — | 418,0 ± 10,5 |
| 24 | 2,10 | — | 371,8 ±  2,5 |
| 4 | — | 2,1 | 47,3 ± 2,2 |
| 4 | 0,21 | 2,1 | 55,9 ± 6,6 |
| 4 | 2,10 | 2,1 | 47,3 ± 0,7 |
| 24 | — | 2,1 | 53,9 ± 4,8 |
| 24 | 0,21 | 2,1 | 48,8 ± 4,6 |
| 24 | 2,10 | 2,1 | 29,7 ± 3,8 |

## Beispiel 2

wurde analog Beispiel 1, jedoch zu einem anderen Zeitpunkt durchgeführt. Darauf ist ein etwas anderes Schlammverhalten zurückzuführen. Der Schlamm hatte 2,5% TS und pH 7,5.

Zur Enzymbehandlung wurde ein mikrobiell erzeugtes, amylasereiches Enzymprodukt mit einem pH-Optimum 6—8 und einer Amylase-Aktivität von 10.000 SKB/g (nach Sandstedt, Kneen u. Blish, "Cer. Chem", 1939, 16. Jg., S. 712) eingesetzt. Eine Verkürzung der CST war schon nach 4-stündiger Enzymeinwirkung zu erkennen:

TABELLE 2

| Einwirkungs-<br>zeit<br>(Stunden) | Enzym-<br>dosierung<br>(g/kg TS) | Flockungshilfs-<br>mitteldosierung<br>(g/kg TS) | CST<br>(sec) |
|---|---|---|---|
| 4 | — | — | 337,8 ± 8,9 |
| 4 | 0,27 | — | 288,2 ± 10,3 |
| 4 | 2,70 | — | 334,5 ± 14,3 |
| 24 | — | — | 344,6 ± 0,6 |
| 24 | 0,27 | — | 324,2 ± 13,7 |
| 24 | 2,70 | — | 341,7 ± 20,8 |
| 4 | — | 2,1 | 100,5 ± 9,3 |
| 4 | 0,27 | 2,1 | 63,1 ± 4,4 |
| 4 | 2,70 | 2,1 | 65,2 ± 5,4 |
| 24 | — | 2,1 | 68,0 ± 5,6 |
| 24 | 0,27 | 2,1 | 42,5 ± 1,2 |
| 24 | 2,70 | 2,1 | 55,6 ± 3,5 |

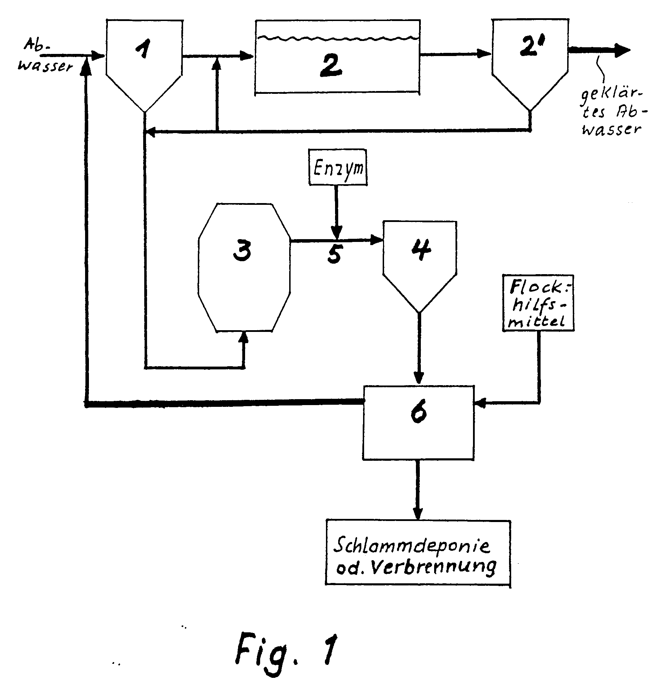

Die zur verbesserten Schlammentwässerung erforderlichen Enzym-Aktivitäten und -Dosierungen werden analog den Beispielen 1 und 2 an Schlammproben im Klärwerk ermittelt. Der Einsatzort der Enzyme in einem kommunalen Klärwerk wird an dem in Fig. 1 dargestellten Schema erläutert.

Primärschlamm aus dem Absetzbehälter (1) des Abwasserstromes wird alleine oder zusammen mit Belebtschlamm aus der aeroben biologischen Klärstufe (2,2') im Faulturm (3) unter Bildung von Methan in Faulschlamm umgewandelt. Nach einer Verweilzeit bis zu 3 Wochen im Faulturm wird der Schlamm in einem Absetzbehälter (4) eingedickt. Das Enzym wird in gelöster Form in die Verbindungsleitung (5) zweischen Faulturm (3) und Absetzbehälter (4) zudosiert und geleichmäßig verteilt. Die Verweilzeit bis zu 48 Stunden im Absetzbehälter (4) ist für die Enzymeinwirkung ausreichend. Der daraus abfließende Schlamm wird zur Entwässerungsanlage (6) gepumpt und nach Zusatz von Flockungshilfsmitteln entwässert.

## Beispiel 3

Wurde analog Beispiel 1 und 2 durchgeführt, jedoch zu einem anderen Zeitpunkt.

Der Trockengehalt betrug 2,47%, der pH 7,6. Als Enzym kam ein mikrobiell erzeugtes cellulaserreiches Enzymprodukt zur Anwendung, welches auch β-Glucanase, Laminarinase und Hemicellulase als Nebenaktivitäten aufweist. Die Cellulaseaktivität beträgt 0,20 FPU/mg. Die Bestimmung der Filter-Paper-Units (FPU) wird gemäß M. Mandels, R. Andreotti und C. Roche in Biotechnol. Bioengin. Symp. 6 (1976), 21—33 (Measurements of Saccharifying Cellulase), durchgeführt.

In diesem Beispiel ist zu sehen, daß sowohl die CST-Werte für enzymbehandelten ungeflockten als auch geflockten Schlamm beträchtlich verbessert sind. Der Effekt wird schon nach wenigen Stunden erreicht und beleibt auch nach 24 Stunden erhalten. Das ist für die in der Praxis auftretenden Schwankungen der Verweilzeiten des Schlammes im Nacheindicker besonders wichtig.

TABELLE 3

| Einwirkungs-<br>zeit<br>(Stunden) | Enzym-<br>dosierung<br>(g/kg TS) | Flockungshilfs-<br>mitteldosierung<br>(g/kg TS) | CST'<br>(sec) |
|---|---|---|---|
| 4 | — | — | $379,3 \pm 4,3$ |
| 4 | 0,22 | — | $335,6 \pm 10,6$ |
| 4 | 2,15 | — | $310,3 \pm 9,4$ |
| 24 | — | — | $351,2 \pm 20,8$ |
| 24 | 0,22 | — | $334,7 \pm 8,4$ |
| 24 | 2,15 | — | $314,8 \pm 16,5$ |
| 4 | — | 2,2 | $76,8 \pm 2,3$ |
| 4 | 0,22 | 2,2 | $74,2 \pm 4,4$ |
| 4 | 2,15 | 2,2 | $45,3 \pm 2,2$ |
| 24 | — | 2,2 | $66,4 \pm 5,5$ |
| 24 | 0,22 | 2,2 | $65,6 \pm 5,1$ |
| 24 | 2,15 | 2,2 | $50,7 \pm 6,3$ |

Beispiel 4

Wurde im Prinzip analog den Beispielen 1—3 durchgeführt, jedoch zu einem anderen Zeitpunkt. Als Maß der Entwässerung wurde der Trockensubstanzgehalt des Filterkuchens gewählt, der durch Entwässerung einer Schlammsuspension mit einer Kompressions-Permeabilitätszelle (CP-Zelle) erhalten wurde.

Sie besteht aus einem Kolben und einem Zylinder, die hydraulisch zusammengepreßt werden. Sowohl der Boden des Zylinders als auch der Deckel des Kolbens werden mit einem für Preßfilter typischen Filtertuch bespannt. Während des Füllvorgangs steht die CP-Zelle senkrecht. Dabei wird der Zylinder bis zu einer gewünschten Anfangskuchenhöhe mit der Schlammprobe gefüllt.

Anschließend werden Kolben und Zylinder zusammengefahren und die eingschlossene Schlammprobe bei einem genau einstellbaren Preßdruck ausgepreßt.

Um wie bei einer Kammerfilterpresse einen beidseitigen Filtratablauf zu gewährleisten, wird die CP-Zelle für den eigentlichen Preßvorgang in horizontale Lage geschwenkt. Das Filtrat fließt über das Filtertauch und eine darunterliegende Lochplatte in einen Filtratsammelraum und in ein Auffanggefäß.

Zur Enzymbehandlung wurde ein cellulasereiches Enzymprodukt mit einer Cellulaseaktivität von 0,2 FPU/mg (Filterpaperunits) eingesetzt.

Der Faulschlam (Trockengehalt 2,5%) wird in gleichgroße Proben aufgeteilt. Die Enzymkonzentration betrug 10 mg/Liter Rohschlamm und die Einwirkungszeit 24 h. Von jeder Schlammcharge wird eine Nullprobe genommen, der kein Enzym zugesetzt wird, die aber ebenfalls 24 h aufbewahrt wird.

Bei den Entwässerungsversuchen wird die CP-Zelle jeweils mit 2 Liter des enzymbehandelten und geflockten Schlammes gefüllt. Als Flockungsmittel wird ein kationischer Polyelektrolyt auf Basis eines Methacrylsäureesters verwendet. Die Konzentration des Flockungsmittels betrug jeweils 10 g FM pro kg Trockensubstanz.

Nach einer Vorentwässerungszeit von 6 Minuten, in der ein Großteil des Schlammwassers infolge Schwerkraftfiltration abläuft, wird die CP-Zelle zugefahren, in horizontale Lage gekippt. Durch Druckfiltration wird restliches Wasser abgepreßt und ein Filterkuchen erhalten, dessen Feststoffgehalt durch Trocknung ermittelt wird.

# EP 0 291 665 B1

Ergebnis:

Der Trockensubstanzgehalt der geflockten, nicht enzymbehandelten Schlammprobe betrug nach dem Abpressen 28,6%. Bei der enzymbehandelten Probe wurde in Trockengehalt von 32,3% ermittelt. Die Steigerung der Trockensubstanz durch Enzymbehandlung betrug somit 12,9%.

## Patentansprüche

1. Verfahren zum Verbessern der Entwässerbarkeit von biologischem Klärschlamm mit mehr als 0,5 Gew.-% Feststoffgehalt, bei dem man dem Klärschlamm ein hydrolytisches Enzympräparat zusetzt, dadurch gekennzeichnet, daß man nach dessen Einwirkung ein synthetisches organisches Flockungsmittel zusetzt.

2. Verfahren nach Anspruch 1, dadurch gekennzeichnet, daß man ein hydrolytisches Enzympräparat einsetzt, das hohe Aktivitäten an Carbohydrasen, Proteasen, Glykoproteinasen und/oder Lipasen enthält.

3. Verfahren nach Anspruch 2, dadurch gekennzeichnet, daß man ein hydrolytisches Enzympräparat einsetzt, das hohe Aktivitäten an Amylasen, Cellulasen und/oder Proteasen enthält.

4. Verfahren nach den Ansprüchen 1 bis 3, dadurch gekennzeichnet, daß man als synthetisches organisches Flockungsmittel einen organischen Polyelektrolyten einsetzt.

5. Verfahren nach Anspruch 4, dadurch gekennzeichnet, daß man einen kationischen organischen Polyelektrolyten einsetzt.

6. Verfahren nach Anspruch 5, dadurch gekennzeichnet, daß man als kationischen organischen Polyelektrolyten ein Mischpolymerisat aus Acrylamid und einem quaternierten Aminoalkylester der Acryl- oder Methacrylsäure zusetzt.

7. Verfahren nach den Ansprüchen 1 bis 6, dadurch gekennzeichnet, daß man das hydrolytische Enzympräparat und das synthetische Flockungsmittel in solchen Mengen einsetzt, daß die standardisierte Saugzeit (CST) gegenüber dem nur mit dem Flockungsmittel behandelten Schlamm um wenigstens 15% vermindert wird.

8. Verfahren nach den Ansprüchen 1 bis 7, dadurch gekennzeichnet, daß ein Klärschlamm eingesetzt wird, dessen Feststoffgehalt (Trockensubstanz) zu wenigstens 30 Gew.-% aus organischem Material besteht.

9. Verfahren nach Anspruch 8, dadurch gekennzeichnet, daß als Klärschlamm ein Faulschlamm aus einem anaerob betriebenen Faulturm eingesetzt wird.

## Revendications

1. Procédé our améliorer l'aptitude au séchage de boues d'épuration biologique ayant un extrait sec supérieur à 0,5% en poids, dans lequel on ajoute aux boues d'épuration une préparation enzymatique hydrolytique, caractérisé en ce que, après action de cette préparation, on ajoute un floculant organique synthétique.

2. Procédé selon la revendication 1, caractérisé en ce qu'on utilise une préparation enzymatique hydrolytique contenant des activités élevées de carbohydrases, de protéases, de glycoprotéinases et/ou de lipases.

3. Procédé selon la revendication 2, caractérisé en ce qu'on utilise une préparation enzymatique hydrolytique contenant des activités élevées d'amylases, de cellulases et/ou de protéases.

4. Procédé selon les revendications 1 à 3, caractérisé en ce qu'on utilise comme floculant organique synthétique un polyélectrolyte organique.

5. Procédé selon la revendication 4, caractérisé en ce qu'on utilise une polyélectrolyte organique.

6. Procédé selon la revendication 5, caractérisé en ce qu'on ajoute comme polyélectrolyte organique cationique un copolymère d'acrylamide et d'un ester aminoalkylique quaternisé de l'acide acrylique ou méthacrylique.

7. Procédé selon les revendications 1 à 6, caractérisé en ce qu'on utilise la préparation enzymatique hydrolytique et le floculant synthétique en des quantités telles que le temps d'aspiration normalisé (CST) diminue d'au moins 15% par rapport aux boues traitées uniquement avec le floculant.

8. Procédé selon les revendications 1 à 7, caractérisé en ce qu'on utilise des boues d'épuration dont l'extrait sec est constitué pour au moins 30% en poids d'un matériau organique.

9. Procédé selon la revendication 8, caractérisé en ce qu'on utilise comme boues d'épuration des boues digérées provenant d'une tour de digestion fonctionnant en mode anaérobie.

## Claims

1. Process for improving the dewaterability of biological clarified sludge having a solids content of more than 0.5% by weight, in which a hydrolytic enzyme preparation is added to the clarified sludge, characterised in that, after this has acted, a synthetic organic flocculating agent is added.

2. Process according to claim 1, characterised in that a hydrolytic enzyme preparation is used which contains high activities of carbohydrases, proteases, glycoproteinases and/or lipases.

8

3. Process according to claim 2, characterised in that a hydrolytic enzyme preparation is used which contains high activities of amylases, cellulases and/or proteases.

4. Process according to claims 1 to 3, characterised in that an organic polyelectrolyte is used as the synthetic organic flocculating agent.

5. Process according to claim 4, characterised in that a cationic organic polyelectrolyte is used.

6. Process according to claim 5, characterised in that a copolymer of acrylamide and a quaternary aminoalkyl ester of acrylic or methacrylic acid is added as cationic organic polyelectrolyte.

7. Process according to claims 1 to 6, characterised in that the hydrolytic enzyme preparation and the synthetic flocculating agent are used in quantities such that the standardised suction time (CST) is reduced by at least 15% compared with sludge which has been treated only with the flocculating agent.

8. Process according to claims 1 to 7, characterised in that a clarified sludge is used, the solids content of which (dry substance) consists of at least 30% by weight of organic material.

9. Process according to claim 8, characterised in that the clarified sludge used is an activated sludge from an anaerobically operated activation tower.

Fig. 1